# EUROPÄISCHE PATENTSCHRIFT

(11) **EP 3 040 595 B1**
(45) Veröffentlichungstag und Bekanntmachung des Hinweises auf die Patenterteilung: **08.11.2017**
(21) Anmeldenummer: 15183886.9
(22) Anmeldetag: 04.09.2015
(51) Int. Cl.: F16L 37/23

(54) **KUPPLUNGSSYSTEM FÜR SCHLAUCH- UND ROHRLEITUNGEN UND VERFAHREN ZUM ZUSAMMENSETZEN EINES KUPPLUNGSSYSTEMS**
COUPLING SYSTEM FOR HOSES AND PIPES AND METHOD FOR ASSEMBLING A COUPLING SYSTEM
SYSTEME DE COUPLAGE POUR TUYAUX ET FLEXIBLES ET PROCEDE D'ASSEMBLAGE D'UN SYSTEME DE COUPLAGE

(30) Priorität: 17.12.2014 DE 202014106118 U
(43) Veröffentlichungstag der Anmeldung: 06.07.2016
(73) Patentinhaber: Lüdecke GmbH, 92224 Amberg (DE)
(72) Erfinder: DEMLEITNER, Eduard, 92289 Ursensollen (DE)
(74) Vertreter: Benninger, Johannes

(56) Entgegenhaltungen:
- DE-U1-202007 006 090
- US-A- 3 550 626
- US-B1- 6 511 100

## Beschreibung

Die vorliegende Erfindung betrifft ein Kupplungssystem für Schlauch- und Rohrleitungen sowie ein Verfahren zum Zusammensetzen eines Kupplungssystems.

Sollen Schlauch- und Rohrleitungen, wie sie beispielsweise im Bereich der Spritzgusstechnik Verwendung finden, miteinander verbunden werden, so sind hierzu aus dem Stand der Technik Schnellverschlusssysteme bekannt, die sich aus einer Kupplung und einem Nippel zusammensetzen. Die Rohr- und Schlauchleitungen können an die Kupplung angesteckt werden, wobei die Kupplung hierzu einen Befestigungsansatz und einen Steckerteil besitzen kann, auf welche die entsprechenden Rohr- und Schlauchleitungen aufgesteckt werden. Um den Nippel von der Kupplung lösen zu können, existieren entsprechende Verriegelungshülsen, die relativ zur Kupplung axial verschoben werden können, wobei die Verbindung zwischen Kupplung und Nippel aufgehoben wird.

Eine derartige Kupplung ist beispielsweise aus dem Gebrauchsmuster DE 20 2007 006 090 U1 und der US3550626 bekannt. Die Kupplung des DE-Gebrauchsmusters besitzt einen Kupplungsteil sowie eine Verriegelungshülse. Weiter ist ein Rastelement vorhanden, mittels dessen ein Stecker an dem Kupplungsteil fixiert werden kann. Durch eine Bewegung der Verriegelungshülse wird die Rastverbindung gelöst, wobei der Stecker durch Federkraft beaufschlagt automatisch vom Kupplungsteil weggeführt wird. Um ein unbeabsichtigtes Lösen des Steckers vom Kupplungsteil zu vermeiden, kann die Verriegelungshülse in eine stabile Drehposition gebracht werden. Schnellverschlusskupplungen gemäß dem DE-Gebrauchsmuster, bei welchen die Verriegelungshülse zum Sichern händisch gedreht werden muss, besitzen weiterhin das Risiko eines ungewollten Lösens des Steckers vom Kupplungsteil, sofern das händische Sichern der Verriegelungshülse vergessen wird oder falsch erfolgt. Zudem sind Kupplungen häufig an Positionen angeordnet, bei welchen kein Sichtkontakt zur Kupplung besteht. Auch in diesem Fall soll eine Verbindung des Steckers mit dem Kupplungsteil und ein Lösen des Steckers vom Kupplungsteil einfach und mit geringem Fehlerrisiko erfolgen können.

Aufgabe der Erfindung ist daher, eine Schnellverschlusskupplung zur Verfügung zu stellen, bei welcher das Risiko eines unbeabsichtigten Lösens eines Steckers vom Kupplungsteil gering gehalten oder ausgeschlossen werden kann. Zudem ist Aufgabe vorliegender Erfindung eine entsprechende Schnellverschlusskupplung zur Verfügung zu stellen, bei welcher eine Verbindung und Entkopplung zwischen Stecker und Kupplungsteil auf einfache und sichere Art und Weise, insbesondere bei fehlendem Sichtkontakt, erfolgen kann.

Die obigen Aufgaben werden durch ein Kupplungssystem gelöst, das die Merkmale in dem Schutzanspruch 1 umfasst. Weitere vorteilhafte Ausgestaltungen werden durch die Unteransprüche beschrieben.

Das erfindungsgemäße Kupplungssystem ist vorgesehen zur Verbindung mit Schlauch- und Rohrleitungen und kann beispielsweise im Bereich der Spritzgusstechnik Verwendung finden, um entsprechende Schlauch- und Rohrleitungen fluidisch aneinander zu koppeln. Hierzu umfasst das Kupplungssystem einen Stecknippel und einen Kupplungskörper, mit einem oder mehreren Rastelementen, mittels welcher der Stecknippel am Kupplungskörper fixierbar ist.

Am Kupplungskörper kann die Schlauch- und Rohrleitung befestigt sein. Insbesondere sind hierbei Ausführungsformen vorstellbar, bei welchen der Kupplungskörper einen Fortsatz besitzt, auf welchen eine jeweilige Schlauch- und Rohrleitung aufgesteckt werden kann.

Der Stecknippel kann einen Kopf besitzen, der einen Außensechskant umfasst. Ist der Stecknippel am Kupplungskörper fixiert, kann der Stecknippel zumindest abschnittsweise in den Kupplungskörper eintauchen. Der Kopf des Stecknippels kann hierbei außerhalb des Kupplungskörpers angeordnet sein. Der Kupplungskörper und der Stecknippel können jeweils einen Kanal bereitstellen, so dass Flüssigkeit den Stecknippel und den Kupplungskörper passieren kann.

Das erfindungsgemäße Kupplungssystem umfasst zudem eine Verriegelungshülse, die über eine Zwangsführung beweglich am Kupplungskörper gehalten ist. Die dem Kupplungskörper abgewandte Außenmantelfläche der Verriegelungshülse kann zumindest abschnittsweise eine Profilierung besitzen. Die Zwangsführung kann eine begrenzte axiale Relativbewegung der Verriegelungshülse gegenüber dem Kupplungskörper erlauben. Insbesondere kann es sein, dass durch eine axiale Bewegung der Verriegelungshülse gegenüber dem Kupplungskörper eine über die ein oder mehreren Rastelemente hergestellte Fixierung des Stecknippels am Kupplungskörper aufgehoben werden kann.

Die ein oder mehreren Rastelemente können durch Rastkugeln ausgebildet sein, die in eine korrespondierende und radial um die Außenmantelfläche des Stecknippels verlaufende Nut eintauchen und den Stecknippel hierbei lösbar am Kupplungskörper festsetzen. Denkbar ist hierbei, dass sich die ein oder mehreren Rastelemente bzw. die Rastkugeln bei relativer Bewegung der Verriegelungshülse gegenüber dem Kupplungskörper außer Eingriff mit dem Stecknippel bewegen, so dass der Stecknippel nicht mehr am Kupplungskörper fixiert ist. Die Verriegelungshülse kann hierzu eine Aussparung und/oder Fase aufweisen, in welche die ein oder mehreren Rastelemente bzw. die Rastkugeln bei einer nachfolgend noch beschriebenen zweiten Relativposition bzw. bei Löseposition eintauchen. Insbesondere kann es sein, dass sich die ein oder mehreren Rastelemente bzw. die Rastkugeln bei relativer Bewegung der Verriegelungshülse gegenüber dem Kupplungskörper in Richtung weg des Stecknippels bewegen.

Der Kupplungskörper kann zumindest einen axial beweglichen Druckzylinder aufweisen, der mit einer Druckfeder in Verbindung steht. Ist der Stecknippel durch die ein oder mehreren Rastelemente am Kupplungskörper fixiert, kann die Druckfeder komprimiert sein und der Stecknippel ggf. am Druckzylinder anliegen. Sofern die ein oder mehreren Rastelemente, ggf. durch eine relative axiale Bewegung der Verriegelungshülse gegenüber dem Kupplungskörper, mit dem Stecknippel bzw. mit einer Nut des Stecknippels außer Eingriff gebracht werden, kann der Druckzylinder den Stecknippel über die Druckfeder in Richtung weg des Kupplungskörpers führen, wobei sich die Druckfeder entspannt und die Fixierung des Stecknippels am Kupplungskörper gelöst bzw. aufgehoben ist. Dem Druckzylinder und einer in Richtung des Druckzylinders weisenden Innenmantelfläche des Kupplungskörpers kann wenigstens ein Dichtelement und insbesondere ein O-Ring zwischengeordnet sein. Der Kupplungskörper kann zum Einstecken des Stecknippels eine stirnseitige Öffnung besitzen.

Weiter umfasst das erfindungsgemäße Kupplungssystem eine Zwangsführung, über welche Zwangsführung die Verriegelungshülse gegenüber dem Kupplungskörper in einer erste Relativposition überführbar ist, bei welcher der Stecknippel über die ein oder mehreren Rastelemente am Kupplungskörper fixiert ist. Weiter ist die Verriegelungshülse gegenüber dem Kupplungskörper mittels der Zwangsführung in eine zweite Relativposition überführbar, bei welcher die Fixierung zwischen den ein oder mehreren Rastelementen und dem Stecknippel aufgehoben ist. Die zweite Relativposition kann somit als Löseposition ausgebildet sein, während die erste Relativposition als Halteposition ausgebildet ist.

Vorstellbar ist hierbei, dass von der Halteposition in die Löseposition lediglich gewechselt werden kann, sofern die Stellkraft einer Feder überwunden wird. Wenigstens eine Feder ist Bestandteil des erfindungsgemäßen Kupplungssystems. Die Feder steht mit dem Kupplungskörper und der Verriegelungshülse in Verbindung und beaufschlagt die Verriegelungshülse gegenüber dem Kupplungskörper zum selbständigen Wechsel aus der zweiten Relativposition in die erste Relativposition mit axialer Stellkraft und einem Drehmoment. Somit beaufschlagt die Feder bei eingenommener zweiter Relativposition die Verriegelungshülse gegenüber dem Kupplungskörper mit axialer Stellkraft und einem Drehmoment. Insbesondere kann es hierbei sein, dass aus einem Einstecken des Stecknippels in den Kupplungskörper resultierend die axiale Stellkraft und das Drehmoment zumindest teilweise abgebaut werden bzw. dass ein Einstecken des Stecknippels in den Kupplungskörper einen Wechsel aus der zweiten Relativposition in die erste Relativposition unter Zuhilfenahme der Feder automatisch bzw. selbständig bewirkt.

Beispielsweise können die ein oder mehreren Rastelemente eine relative Bewegung der Verriegelungshülse gegenüber dem Kupplungskörper in der zweiten Relativposition bzw. der Löseposition sperren. Weiter können die ein oder mehreren Rastelemente bzw. die Rastkugeln bei Einstecken des Stecknippels in den Kupplungskörper in eine radiale Nut des Stecknippels eintauchen, wobei die Sperrung aufgehoben ist. Da die Verriegelungshülse gegenüber dem Kupplungskörper durch die Feder mit axialer Stellkraft und einem Drehmoment beaufschlagt ist, kann unmittelbar nach Aufheben der Sperrung automatisch von der zweiten Relativposition in die erste Relativposition gewechselt werden. Eine händische Sicherung der Verriegelungshülse gegen unbeabsichtigte Betätigung ist hierbei nicht mehr notwendig. Vielmehr wird die Sicherung mittels eines Einsteckens des Stecknippels in den Kupplungskörper und einem hiermit selbständig einhergehenden Wechsel von der zweiten Relativposition in die erste Relativposition bewirkt.

Denkbar ist zudem, dass die Zwangsführung durch eine S-förmige Nut in der Verriegelungshülse ausgebildet ist, durch welche ein fest mit dem Kupplungskörper in Verbindung stehender Zapfen greift. Insbesondere kann die S-förmige Nut wenigstens zwei Schenkel besitzen, die parallel zur Längsachse der Verriegelungshülse verlaufen. Befindet sich der Zapfen in einem Endbereich der S-förmigen Nut, kann die Verriegelungshülse gegenüber dem Kupplungskörper in die erste oder zweite Relativposition überführt sein.

Auch können die wenigstens zwei Schenkel durch einen Abschnitt der S-förmigen Nut miteinander verbunden sein, welcher Abschnitt orthogonal zu den beiden Schenkeln verläuft. Der Abschnitt der S-förmigen Nut, welcher die Schenkel miteinander verbindet, kann somit entlang der Längsachse der Verriegelungshülse orientiert sein. Befindet sich der Zapfen im Bereich des Abschnittes, so kann zwischen dem Abschnitt und dem Zapfen zumindest ein geringes Spiel senkrecht zur Längsachse der Verriegelungshülse ausgebildet sein.

Insbesondere kann es sein, dass die erste Relativposition und die zweite Relativposition dann ausgebildet sind, wenn sich der Zapfen in einem jeweiligen Endbereich der wenigstens zwei Schenkel befindet. Die Endpositionen können somit in axialer Richtung sowie in Umfangsrichtung versetzt an der Verriegelungshülse ausgebildet sein.

Darüber hinaus kann es sein, dass die Feder mit ihren beiden Endbereichen über jeweils eine Haltenase an der Verriegelungshülse und am Kupplungskörper fixiert ist. Die Haltenasen können jeweils parallel oder zumindest näherungsweise parallel zur Längsachse des Kupplungskörpers verlaufen und in korrespondierenden Aussparungen der Verriegelungshülse und des Kupplungskörpers formschlüssig aufgenommen sein.

Weiter kann es sein, dass die wenigstens eine Feder in einem zwischen dem Kupplungskörper und der Verriegelungshülse ausgebildetem Hohlraum aufgenommen ist. Der Hohlraum kann als Ringspalt zwischen dem Kupplungskörper und der Verriegelungshülse ausgebildet sein. Somit kann der Hohlraum bzw. der Ringspalt vollständig um den Kupplungskörper verlaufen.

Weiter kann es sein, dass die wenigstens eine Feder eine Windungszahl größer oder gleich 3 besitzt. Derartige Ausführungsformen haben sich bewährt, um den Aufbau des Kupplungssystems kompakt zu halten und sicher zwischen den beiden Relativpositionen wechseln zu können.

Es ist zudem vorstellbar, dass die Feder mit dem Kupplungskörper und der Verriegelungshülse derart in Verbindung steht, dass ihre axiale Stellkraft sowie ihre Drehmomentbeaufschlagung der Verriegelungshülse gegenüber dem Kupplungskörper in der ersten Relativposition vollständig oder zumindest näherungsweise vollständig aufgehoben sind.

In denkbaren Ausführungsformen kann es sein, dass über eine erste Feder eine axiale Stellkraft der Verriegelungshülse gegenüber dem Kupplungskörper bewirkt wird und über eine zweite Feder eine Drehmomentbeaufschlagung der Verriegelungshülse gegenüber dem Kupplungskörper bewirkt wird. In bevorzugten Ausführungsformen kann jedoch eine bzw. genau eine Feder vorgesehen sein, welche eine Feder zum selbständigen Wechsel aus der zweiten Relativposition in die erste Relativposition die Verriegelungshülse gegenüber dem Kupplungskörper mit axialer Stellkraft und einem Drehmoment beaufschlagt.

Die Erfindung betrifft darüber hinaus ein Verfahren zum Zusammensetzen eines Kupplungssystems. Das Kupplungssystem kann gemäß vorheriger Beschreibung ausgebildet sein. Konstruktive Merkmale werden daher nachfolgend nicht mehrfach erwähnt.

Im Rahmen des Verfahrens wird ein Stecknippel stirnseitig und vorzugsweise koaxial in einen Kupplungskörper eingesteckt. Hieraus resultierend setzen ein oder mehrere Rastelemente, die beispielsweise durch Rastkugeln ausgebildet sind, den Stecknippel am Kupplungskörper fest.

Aus dem Einstecken des Stecknippels resultierend wechselt zudem eine Verriegelungshülse, die am Kupplungskörper gehalten wird, selbständig aus einer zweiten Relativposition in eine erste Relativposition gegenüber dem Kupplungskörper. Der Wechsel kann unter Zuhilfenahme einer Zwangsführung erfolgen, welche eine relative Bewegung der Verriegelungshülse gegenüber dem Kupplungskörper bei Wechsel aus der zweiten Relativposition in die erste Relativposition vorgibt. Weiter kann mittels der Zwangsführung eine relative Verdrehung der Verriegelungshülse gegenüber dem Kupplungskörper in der ersten Relativposition unterbunden werden.

In der ersten Relativposition setzen die ein oder mehreren Rastelemente des Kupplungskörpers den Stecknippel fest. In der zweiten Relativposition wird das Festsetzen über die Verriegelungshülse aufgehoben. Die Verriegelungshülse kann hierbei in der zweiten Relativposition die ein oder mehreren Rastelemente ggf. radial in Richtung weg des Stecknippels bewegen, so dass dieser nicht mehr über die ein oder mehreren Rastelemente bzw. ggf. Rastkugeln an dem Kupplungskörper gehalten wird. Eine Druckfeder kann vorgesehen sein, welche den Stecknippel bei zweiter Relativposition der Verriegelungshülse gegenüber dem Kupplungskörper in Richtung weg des Kupplungskörpers bewegt.

Weiter ist vorgesehen, dass das selbständige Überführen aus der zweiten Relativposition in die erste Relativposition mittels wenigstens einer Feder erfolgt, welche die Verriegelungshülse gegenüber dem Kupplungskörper hierbei verdreht und axial bewegt. Hierdurch kann eine einfache und unkomplizierte Verbindung zwischen Stecknippel und Kupplungskörper hergestellt werden, wobei der Stecknippel sicher am Kupplungskörper gehalten wird, wenn sich die Verriegelungshülse gegenüber dem Kupplungskörper in der ersten Relativposition befindet.

Bei bevorzugten Ausführungsformen kann vorgesehen sein, dass die Verriegelungshülse bei Wechsel aus der zweiten Relativposition in die erste Relativposition mittels der wenigstens einen Feder zunächst gegenüber dem Kupplungskörper axial versetzt und zeitlich hierauf folgend vorzugsweise ohne axialen Versatz verdreht wird, um aus der ersten Relativposition in die zweite Relativposition zu wechseln.

Insbesondere kann es sein, dass die Verriegelungshülse zeitlich nach Verdrehen gegenüber dem Kupplungskörper vorzugsweise ohne Verdrehen erneut axial versetzt wird und hierbei in die erste Relativposition gelangt. Eine vorherig beschriebene Zwangsführung mittels bzw. entlang welcher die Verriegelungshülse bei Wechsel aus der zweiten Relativposition in die erste Relativposition bewegt wird, kann hierzu einen Durchbruch in der Verriegelungshülse umfassen, durch welchen ein drehfest mit dem Kupplungskörper in Verbindung stehender Bolzen greift.

Weiter kann es sein, dass die wenigstens eine Feder bei Wechsel aus der zweiten Relativposition in die erste Relativposition mit axialer Stellkraft und einem Moment bzw. Drehmoment auf die Verriegelungshülse einwirkt, welche axiale Stellkraft und welches Moment in der ersten Relativposition zumindest näherungsweise vollständig aufgehoben sind.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Figur 1 zeigt eine schematische dreidimensionale Schnittdarstellung einer Ausführungsform eines erfindungsgemäßen Kupplungssystems;
Figur 2 zeigt die Ausführungsform eines Kupplungssystems gemäß Figur 1 im Längsschnitt;
Figur 3 zeigt eine weitere Darstellung der Ausführungsform eines Kupplungssystems aus den Figuren 1 und 2 im Teilschnitt;
Figur 4 zeigt eine schematische dreidimensionale Schnittdarstellung der Ausführungsform eines Kupplungssystems gemäß Figuren 1 bis 3 ohne Stecknippel;
Figur 5 zeigt die Ausführungsform eines Kupplungssystems ohne Stecknippel aus Figur 4 im Längsschnitt;
Figur 6 zeigt eine Darstellung der Ausführungsform eines Kupplungssystems ohne Stecknippel aus den Figuren 4 und 5 im Teilschnitt.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die das erfindungsgemäße Kupplungssystem ausgestaltet sein kann und stellen keine abschließende Begrenzung dar.

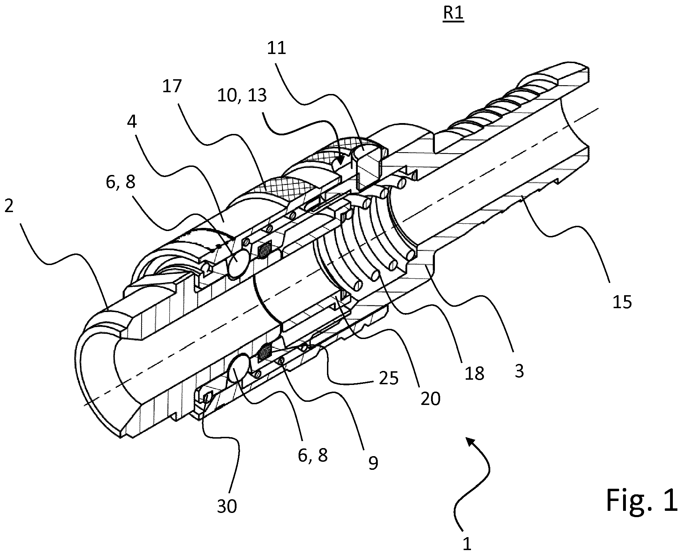

Figur 1 zeigt eine schematische dreidimensionale Schnittdarstellung einer Ausführungsform eines erfindungsgemäßen Kupplungssystems 1. Mittels des Kupplungssystems 1 gemäß den nachfolgenden Ausführungsbeispielen können diverse Ausführungsformen des erfindungsgemäßen Verfahrens umgesetzt werden.

Mittels des Kupplungssystems 1 werden Schlauchleitungen, wie sie beispielsweise im Bereich der Spritzgusstechnik Verwendung finden, miteinander verbunden werden. Eine in den Figuren vorliegender Gebrauchsmusteranmeldung nicht mit dargestellte Schlauchleitung ist hierbei auf einen als Bestandteil des Kupplungskörpers 3 ausgebildeten Fortsatz 15 aufgesetzt und kann beispielsweise als Kühlschlauch ausgebildet sein. Am gegenüberliegenden freien Endbereich besitzt das Kupplungssystem 1 einen Stecknippel 2, auf welchen eine weitere Schlauchleitung aufgesetzt werden kann. Über das Kupplungssystem 1 können somit zwei Schlauch- bzw. Rohrleitungen aneinander gekoppelt und fluidisch miteinander verbunden werden.

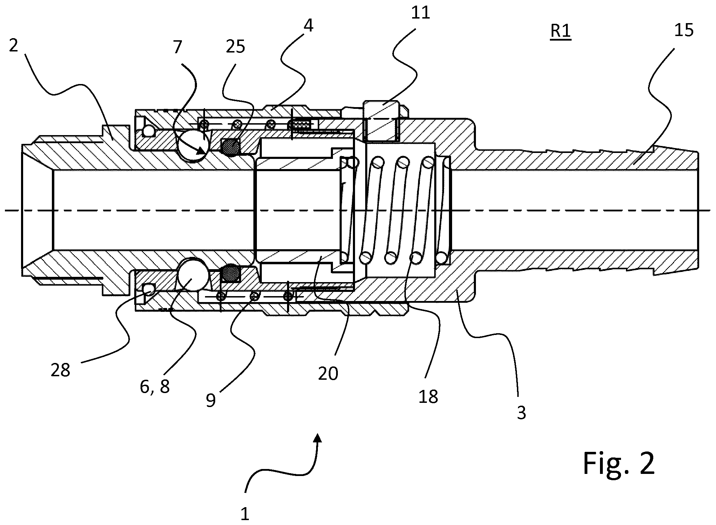

Der Stecknippel 2 ist lösbar am Kupplungskörper 3 gehalten. Hierzu gelangen bei Einstecken des Stecknippels 2 in den Kupplungskörper 3 mehrerer Rastelemente 6, welche als Rastkugeln 8 ausgebildet sind, mit dem Stecknippel 2 in Eingriff bzw. tauchen in eine korrespondierende Nut 7 (vgl. Figur 2) des Stecknippels 2 ein. Die Nut 7 verläuft radial um die Längsachse des Stecknippels 2.

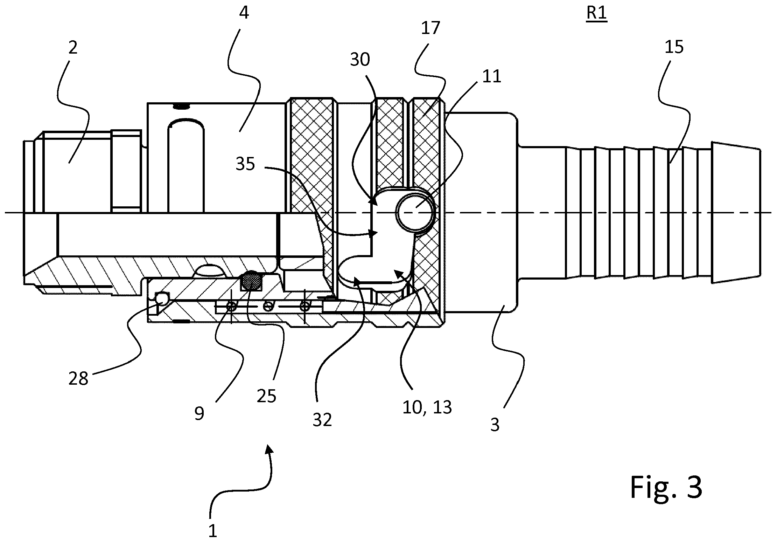

Das Kupplungssystem 1 umfasst eine Verriegelungshülse 4, die auf dem Kupplungskörper 3 verschiebbar aufsitzt. Weiter ist eine Zwangsführung 10 dargestellt, die auch in Figur 3 sehr gut zu erkennen ist und über welche Zwangsführung 10 eine relative Bewegung der Verriegelungshülse 4 gegenüber dem Kupplungskörper 3 vorgegeben wird. Hierzu taucht ein Zapfen 11 in die als S-förmige Nut 13 ausgebildete Zwangsführung 10 ein. Der Zapfen 11 ist fest mit den Kupplungskörper 3 verbunden. Die S-förmige Nut 13 ist Bestandteil der Verriegelungshülse 4.

Über die Zwangsführung 10 ist die Verriegelungshülse 4 gegenüber dem Kupplungskörper 3 in eine erste Relativposition R1 überführbar, bei welcher der Stecknippel 2 über die Rastelemente 6 bzw. die Rastkugeln 8 am Kupplungskörper 3 fixiert ist. Auch ist die Verriegelungshülse 4 gegenüber dem Kupplungskörper 3 mittels der Zwangsführung 10 in eine zweite Relativposition R2 überführbar, bei welcher die Fixierung zwischen den ein oder mehreren Rastelementen 6 bzw. den Rastkugeln 8 und dem Stecknippel 2 aufgehoben ist.

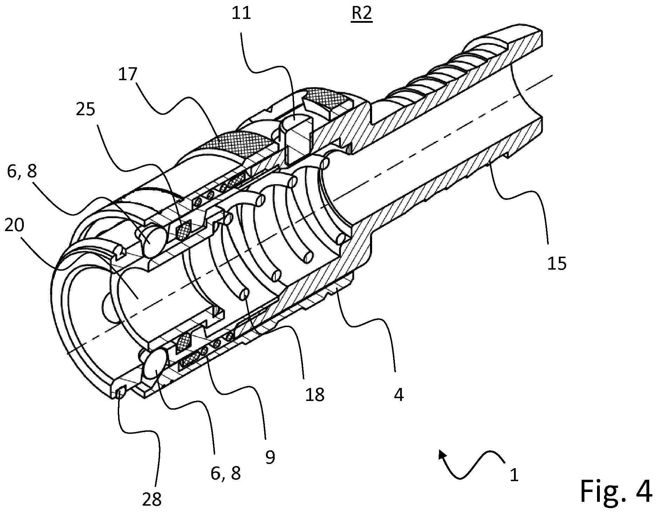

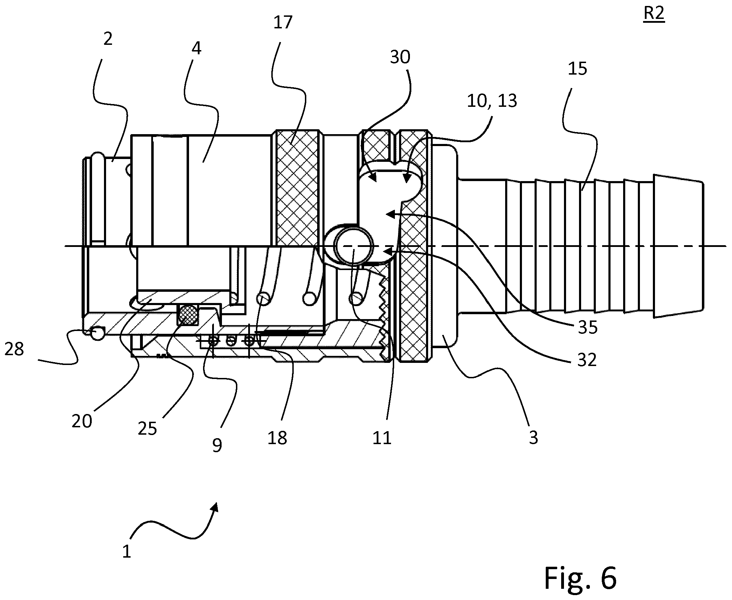

Die erste Relativposition R1 ist hierbei in den Figuren 1 bis 3 dargestellt, hingegen ist die zweite Relativposition R2 in den Figuren 4 bis 6 zu erkennen. Wie insbesondere eine Zusammenschau der Figuren 3 und 6 zeigt, ist der Zapfen 11 bei erster Relativposition R1 in einem ersten Endbereich der S-förmigen Nut 13 positioniert, während der Zapfen 11 bei zweiter Relativposition R2 in einem zweiten Endbereich der S-förmigen Nut 13 positioniert ist. Der erste und zweite Endbereich sind axial und in Umfangsrichtung an der Verriegelungshülse 4 versetzt zueinander angeordnet.

Das Kupplungssystem 1 umfasst zudem eine Feder 9, die mit einem freien Ende an den Kupplungskörper 3 und mit ihrem gegenüberliegenden freien Ende an die Verriegelungshülse 4 mechanisch gekoppelt ist. In der zweiten Relativposition R2 (vgl. Figuren 4 bis 6) beaufschlagt die Feder 9 die Verriegelungshülse 4 gegenüber dem Kupplungskörper 3 mit axialer Stellkraft sowie mit einem Drehmoment.

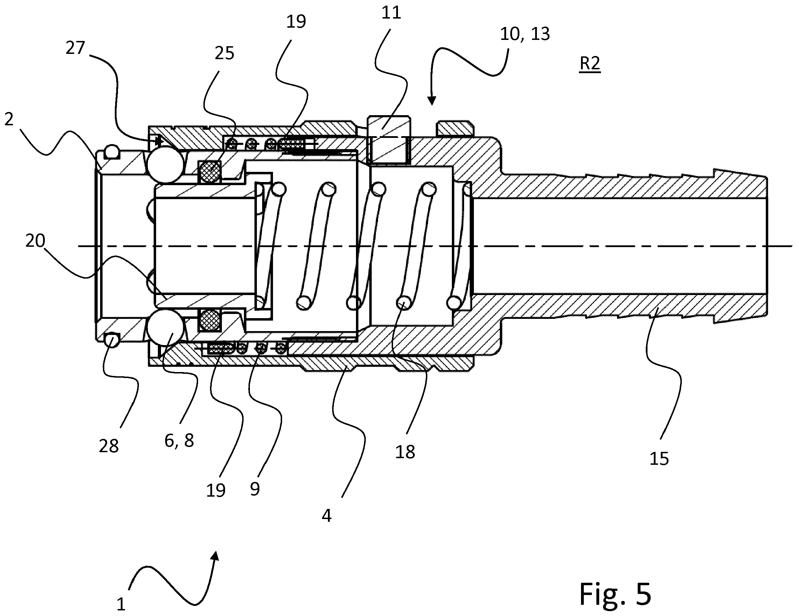

Figur 5 lässt erkennen, dass die Verriegelungshülse 4 eine Fase 27 besitzt, die in der zweiten Relativposition R2 an den Rastelementen 6 bzw. den Rastkugeln 8 anliegt. Wird der Stecknippel 2 in den Kupplungskörper 3 geführt, so bewegen sich die Rastelemente 6 bzw. die Rastkugeln 8 kraftbeaufschlagt gegen die Fase 27, wobei die Verriegelungshülse 4 gegenüber dem Kupplungskörper 3 geringfügig axial versetzt wird. Figuren 3 und 6 lassen besonders gut erkennen, dass sich die Zwangsführung 10 bzw. die S-förmige Nut 13 aus zwei parallel zueinander verlaufenden Schenkeln 30 und 32 und einem Abschnitt 35 zusammensetzt, der die beiden Schenkel 30 und 32 miteinander verbindet. Durch den geringfügigen axialen Versatz wird der Zapfen 11 bei Einstecken des Stecknippels 2 aus der in Figur 6 gezeigten Position im Schenkel 32 in Richtung des Abschnitts 35 bewegt, bis er diesen erreicht. Hierauf wirkt zunächst die Drehmomentbeaufschlagung der Feder 9 derart auf die Verriegelungshülse 4 und den Kupplungskörper 3, dass der Zapfen 11 selbständig und ohne manuelle Verdrehung in Richtung des Schenkels 30 wandert bzw. selbständig in Richtung des Schenkels 30 geführt ist. Da der Zapfen 11 fest mit dem Kupplungskörper 3 in Verbindung steht, wird die selbständige Bewegung des Zapfens 11 in Richtung des Schenkels 30 durch relative Bewegung der Verriegelungshülse 4 gegenüber dem Kupplungskörper 3 bewirkt. Da die Feder 9 die Verriegelungshülse 4 gegenüber dem Kupplungskörper 3 mit axialer Stellkraft beaufschlagt, bewegt sich der Zapfen 11 bei Erreichen des Schenkels 30 selbständig und ohne händischen Versatz in die Position gemäß Figuren 1 bis 3. Die Verriegelungshülse 4 und der Kupplungskörper 3 sind nun durch Einstecken des Stecknippels 2 in den Kupplungskörper 3 automatisch in die erste Relativposition R1 überführt.

Wie aus der Ansicht gemäß Figur 3 verständlich wird, unterbindet der Zapfen 11 in der ersten Relativposition R1, bei welcher der Stecknippel 2 in den Kupplungskörper 3 eingesteckt ist, eine relative Verdrehung der Verriegelungshülse 4 gegenüber dem Kupplungskörper 3. Ein unbeabsichtigtes Lösen des Stecknippels 2 von dem Kupplungskörper 3 bzw. ein unbeabsichtigtes Überführen in die zweite Relativposition R2 gemäß Figuren 4 bis 6 kann hierdurch ausgeschlossen werden.

Ein Überführen der Verriegelungshülse 4 gegenüber dem Kupplungskörper 3 von der ersten Relativposition R1 in die zweite Relativposition R2 erfolgt durch manuelle Bewegung der Verriegelungshülse 4 gegenüber dem Kupplungskörper 3. Ausgehend von der ersten Relativposition R1, bei welcher, wie in Figur 3 gut zu erkennen, der Zapfen 11 im Schenkel 30 bzw. in einem Endbereich der S-förmigen Nut 10 positioniert ist, wird die Verrieglungshülse 4 gegenüber dem Kupplungskörper 3 zunächst geringfügig axial versetzt, bis der Zapfen 11 in den Abschnitt 35 gelangt. Hierbei wird die Feder 9 komprimiert.

Hierauf folgend kann die Verriegelungshülse 4 gegenüber dem Kupplungskörper 3 manuell verdreht werden, wobei der Zapfen 11 über den Abschnitt 35 wandert und sich in Richtung des Schenkels 32 bewegt. Hierbei wird die Feder 9 auf Torsion beansprucht und kann, sofern wiederum ein Wechsel aus der zweiten Relativposition R2 in die erste Relativposition R1 erfolgen soll, die Verriegelungshülse 4 gegenüber dem Kupplungskörper 3 selbständig verdrehen.

Abschließend wird die Verriegelungshülse 4 gegenüber dem Kupplungskörper 3 zurückgezogen bzw. relativ gegenüber dem Kupplungskörper 3 und in axialer Richtung bewegt, wobei der Zapfen 11 im Schenkel 32 wandert und in die Position gemäß Figuren 4 bis 6 überführt wird. Hierbei löst sich die Verbindung zwischen den Rastelementen 6 bzw. den Rastkugeln 8 und dem Stecknippel 2, so dass der Stecknippel 2 nicht mehr am Kupplungskörper 3 fixiert ist.

Wie insbesondere in den Figuren 1 und 2 zu erkennen, steht der Stecknippel 2 bei erster Relativposition R1 in Anlage mit einem Druckzylinder 20, der wiederum mittels der Druckfeder18 kraftbeaufschlagt gegen den Stecknippel 2 geführt ist. Sofern die Fixierung des Stecknippels 2 über die Rastelemente 6 bzw. über die Rastkugeln 8 aufgehoben wird, bewegt der Druckzylinder 20 den Stecknippel 2 über die Druckfeder 18 nach außen bzw. in Richtung weg des Kupplungskörpers 3.

Figur 2 zeigt die Ausführungsform eines Kupplungssystems 1 gemäß Figur 1 im Längsschnitt. In Figur 2 ist die Position der Feder 9 gut zu erkennen. So ist diese in einem Hohlraum aufgenommen, der zwischen der Verriegelungshülse 4 und dem Kupplungskörper 3 ausgebildet ist. Auch lässt Figur 2 erkennen, dass die Druckfeder 18 in der ersten Relativposition R1 den Stecknippel 2 nicht nach außen bzw. in Richtung weg des Kupplungskörpers 3 bewegen kann, da der Stecknippel 2 über die Rastelemente 6 bzw. die Rastkugeln 8 am Kupplungskörper 3 gehalten ist. Um den Stecknippel 2 über den Druckzylinder 20 bzw. über die Druckfeder 18 in Richtung weg des Kupplungskörpers 3 zu bewegen, muss zunächst der Eingriff zwischen den Rastelementen 6 bzw. den Rastkugeln 8 und dem Stecknippel 2 aufgehoben werden. Dies erfolgt durch Wechsel aus der ersten Relativposition R1 in die zweite Relativposition R2, wozu die Verriegelungshülse 4 gegenüber dem Kupplungskörper 3 bewegt wird. Zum Zwecke einer fluidischen Abdichtung steht mit den Kupplungskörper 3 und dem Stecknippel 2 in der ersten Relativposition R1 ein O-Ring 25 in Anlage. Weiter umfasst das Kupplungssystem 1 ein ringförmiges Anschlagelement 28, das in der in Figur 2 gezeigten ersten Relativposition R1 an der Verriegelungshülse 4 anliegt und in der zweiten Relativposition R2 gegenüber der Verriegelungshülse 4 beabstandet ist.

Figur 3 zeigt eine weitere Darstellung der Ausführungsform eines Kupplungssystems 1 aus den Figuren 1 und 2 im Teilschnitt. Hierbei lässt Figur 3 erkennen, dass die Verriegelungshülse 4 an ihrer Außenmantelfläche eine Profilierung 17 besitzt, die zur besseren Handhabung bzw. zum vereinfachten manuellen Überführen der Verriegelungshülse 4 gegenüber dem Kupplungskörper 3 in die zweite Relativposition R2 (vgl. Figuren 4 bis 6) dient. Auch ist in Figur 3 nochmals die S-förmig Nut 13 mit ihren parallel zueinander verlaufenden Schenkeln 30 und 32 und dem Abschnitt 35, welcher die Schenkel 30 und 32 verbindet, zu erkennen. Der Öffnungsquerschnitt des ersten Schenkels 30 ist gegenüber dem Öffnungsquerschnitt 32 geringfügig vergrößert ausgebildet, so dass der Zapfen 11 im ersten Schenkel 30 ein geringes Spiel besitzt.

Figur 4 zeigt eine schematische dreidimensionale Schnittdarstellung der Ausführungsform eines Kupplungssystems 1 gemäß Figuren 1 bis 3 ohne Stecknippel 2. Verrieglungshülse 4 und Kupplungskörper 3 befinden sich nun in der zweiten Relativposition R2, bei welcher die Fixierung zwischen dem Kupplungskörper 3 und dem Stecknippel 2 (vgl. Figuren 1 bis 3) aufgehoben ist. Die Druckfeder 18 ist entspannt, so dass der Stecknippel 2 über den Druckzylinder 20 in Richtung weg des Kupplungskörpers 3 bewegt werden konnte. Der O-Ring 25 liegt nun an dem Druckzylinder 20 an. Zu erkennen ist weiterhin die Feder 9, die mit Torsion beaufschlagt wurde und axiale Stellkraft speichert.

Wird der Zapfen 11 nun durch Einstecken des Stecknippels 2 in den Bereich des Abschnitts 35 bewegt, kann die Feder 9 die Verriegelungshülse 4 gegenüber dem Kupplungskörper 3 mit einem Drehmoment und axialer Stellkraft beaufschlagen, so dass die Verriegelungshülse 4 gegenüber dem Kupplungskörper 3 in die erste Relativposition R1 überführt wird, wie sie Figuren 1 bis 3 zeigen.

Figur 5 zeigt die Ausführungsform eines Kupplungssystems 1 ohne Stecknippel 2 aus Figur 4 im Längsschnitt. Zu erkennen sind zwei Haltenasen 19 der Feder 9. Über die Haltenasen 19 ist die Feder 9 an der Verriegelungshülse 4 und an dem Kupplungskörper 3 festgesetzt. Die Haltenasen 19 tauchen hierzu in korrespondierende Aussparungen der Verriegelungshülse 4 und des Kupplungskörpers 3 ein.

Figur 6 zeigt eine Darstellung der Ausführungsform eines Kupplungssystems ohne Stecknippel 2 aus den Figuren 4 und 5 im Teilschnitt. Gut sind in Figur 6 nochmals die beiden Schenkel 30 und 32 zu erkennen, die parallel zueinander verlaufen sowie der Abschnitt 35, welcher die beiden Schenkel 30 und 32 miteinander verbindet und orthogonal zu den Schenkeln 30 und 32 orientiert ist. Der Wechsel aus der zweiten Relativposition R2 gemäß Figur 6 in die erste Relativposition R1 gemäß Figuren 1 bis 3 erfolgt durch stirnseitiges Einstecken des Stecknippels 2 in den Kupplungskörper 3.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 1: Kupplungssystem
- 2: Stecknippel
- 3: Kupplungskörper
- 4: Verriegelungshülse 6 Rastelemente
- 7: Nut
- 8: Rastkugel
- 9: Feder
- 10: Zwangsführung
- 11: Zapfen
- 13: S-förmige Nut
- 15: Fortsatz
- 17: Profilierung
- 18: Druckfeder
- 19: Haltenase
- 20: Druckzylinder
- 25: O-Ring
- 27: Fase
- 28: Anschlag
- 30: Erster Schenkel
- 32: Zweiter Schenkel
- 35: Abschnitt

- R1: Erste Relativposition
- R2: Zweite Relativposition

## Patentansprüche

1. Kupplungssystem (1) für Schlauch- und Rohrleitungen, umfassend
- einen Stecknippel (2),
- einen Kupplungskörper (3), mit einem oder mehreren Rastelementen (6), mittels welcher der Stecknippel (2) am Kupplungskörper (3) fixierbar ist sowie mit
- einer Verriegelungshülse (4), die über eine Zwangsführung (10) beweglich am Kupplungskörper (3) gehalten ist,
über welche Zwangsführung (10)
a) die Verriegelungshülse (4) gegenüber dem Kupplungskörper (3) in eine erste Relativposition (R1) überführbar ist, bei welcher der Stecknippel (2) über die ein oder mehreren Rastelemente (6) am Kupplungskörper (3) fixiert ist und über welche Zwangsführung (10)
b) die Verriegelungshülse (4) gegenüber dem Kupplungskörper (3) in eine zweite Relativposition (R2) überführbar ist, bei welcher die Fixierung zwischen den ein oder mehreren Rastelementen (6) und dem Stecknippel (2) aufgehoben ist, wobei
das Kupplungssystem (1) wenigstens eine Feder (9) umfasst, die mit dem Kupplungskörper (3) und der Verriegelungshülse (4) in Verbindung steht und zum selbständigen Wechsel aus der zweiten Relativposition (R2) in die erste Relativposition (R1) die Verriegelungshülse (4) gegenüber dem Kupplungskörper (3) mit axialer Stellkraft und einem Drehmoment beaufschlagt, **dadurch gekennzeichnet, dass**
- die Zwangsführung (10) durch eine S-förmige Nut (13) in der Verriegelungshülse (4) ausgebildet ist, durch welche ein fest mit dem Kupplungskörper (3) in Verbindung stehender Zapfen (11) greift, wobei
- die S-förmige Nut (13) wenigstens zwei Schenkel (30, 32) besitzt, deren Führungsrichtungen für den Zapfen (11) jeweils parallel zur Längsachse der Verriegelungshülse (4) verlaufen.

2. Kupplungssystem nach Anspruch 1, bei welcher die wenigstens zwei Schenkel (30, 32) durch einen Abschnitt (35) der S-förmigen Nut (13) miteinander verbunden sind, welcher Abschnitt (35) orthogonal zu den beiden Schenkeln (30, 32) verläuft.

3. Kupplungssystem nach Anspruch 2, bei welchem der Abschnitt (35) der S-förmigen Nut (13), welcher die Schenkel (30, 32) miteinander verbindet, entlang der Längsachse der Verriegelungshülse (4) orientiert ist.

4. Kupplungssystem nach einem der Ansprüche 1 bis 3, bei welchem die erste Relativposition (R1) und die zweite Relativposition (R2) bei Position des Zapfens (11) in jeweils einem Endbereich der wenigstens zwei Schenkel (30, 32) ausgebildet sind.

5. Kupplungssystem nach einem oder mehreren der Ansprüche 1 bis 4, bei welchem die wenigstens eine Feder (9) mit ihren beiden Endbereichen über jeweils eine Haltenase (19) an der Verriegelungshülse (4) und am Kupplungskörper (3) fixiert ist.

6. Kupplungssystem nach Anspruch 5, bei welchem die Haltenasen (19) jeweils parallel oder zumindest näherungsweise parallel zur Längsachse des Kupplungskörpers (3) verlaufen und in korrespondierenden Aussparungen der Verriegelungshülse (4) und des Kupplungskörpers (3) formschlüssig aufgenommen sind.

7. Kupplungssystem nach einem oder mehreren der Ansprüche 1 bis 6, bei welchem die wenigstens eine Feder (9) in einem zwischen dem Kupplungskörper (3) und der Verriegelungshülse (4) ausgebildetem Hohlraum aufgenommen ist.

8. Kupplungssystem nach einem oder mehreren der Ansprüche 1 bis 7, bei welcher die wenigstens eine Feder (9) eine Windungszahl größer oder gleich 3 besitzt.

9. Kupplungssystem nach einem oder mehreren der Ansprüche 1 bis 8, bei welchem die wenigstens eine Feder (9) mit dem Kupplungskörper (3) und der Verriegelungshülse (4) derart in Verbindung steht, dass ihre axiale Stellkraft sowie ihre Drehmomentbeaufschlagung der Verriegelungshülse (4) gegenüber dem Kupplungskörper (3) in der ersten Relativposition (R1) vollständig oder zumindest näherungsweise vollständig aufgehoben sind.

10. Kupplungssystem nach einem oder mehreren der Ansprüche 1 bis 9, umfassend genau eine Feder (9), welche genau eine Feder (9) zum selbständigen Wechsel aus der zweiten Relativposition (R2) in die erste Relativposition (R1) die Verriegelungshülse (4) gegenüber dem Kupplungskörper (3) mit axialer Stellkraft und einem Drehmoment beaufschlagt.

11. Verfahren zum Zusammensetzen eines Kupplungssystems (1), bei welchem ein Stecknippel (2) stirnseitig in einen Kupplungskörper (3) eingesteckt wird, woraus resultierend
a) ein oder mehrere Rastelemente (6) des Kupplungskörpers (3) den Stecknippel (2) am Kupplungskörper (3) festsetzen und
b) eine Verriegelungshülse (4), die am Kupplungskörper (3) gehalten wird, selbständig aus einer zweiten Relativposition (R2) in eine erste Relativposition (R1) gegenüber dem Kupplungskörper (3) wechselt, bei welcher ersten Relativposition (R1) die ein oder mehreren Rastelemente (6) des Kupplungskörpers (3) den Stecknippel (2) festsetzen und bei welcher zweiten Relativposition (R2) das Festsetzen über die Verriegelungshülse (4) aufgehoben wird, wobei
das selbständige Überführen aus der zweiten Relativposition (R2) in die erste Relativposition (R1) mittels wenigstens einer Feder (9) erfolgt, welche die Verriegelungshülse (4) gegenüber dem Kupplungskörper (3) hierbei verdreht und axial bewegt, **dadurch gekennzeichnet, dass**
- die Verriegelungshülse (4) bei Wechsel aus der zweiten Relativposition (R2) in die erste Relativposition (R1) mittels der wenigstens einen Feder (9) zunächst gegenüber dem Kupplungskörper (3) axiale versetzt und zeitlich hierauf folgend ohne axialen Versatz verdreht wird, um aus der zweiten Relativposition (R2) in die erste Relativposition (R1) zu wechseln und wobei
- die Verriegelungshülse (4) zeitlich nach Verdrehen gegenüber dem Kupplungskörper (3) ohne Verdrehen erneut axiale versetzt wird und hierbei in die erste Relativposition (R1) gelangt.

12. Verfahren nach Anspruch 11, bei welchem die wenigstens eine Feder bei Wechsel aus der zweiten Relativposition (R2) in die erste Relativposition (R1) mit axialer Stellkraft und einem Moment auf die Verriegelungshülse (4) einwirkt, welche axiale Stellkraft und welches Moment in der ersten Relativposition (R1) zumindest näherungsweise vollständig aufgehoben sind.

## Claims

1. A coupling system (1) for tubing and pipelines, comprising
- a plug nipple (2);
- a coupling body (3), with one or more latching elements (6), with the plug nipple (2) being fixable to the coupling body (3) by means of the one or more latching elements (6); as well as with
- a locking sleeve (4) being movably held at the coupling body (3) by a forced guidance (10),
by way of which forced guidance (10)
a) the locking sleeve (4) is transferable in relation to the coupling body (3) into a first relative position (R1) in which the plug nipple (2) is affixed to the coupling body (3) by the one or more latching elements (6); and by way of which forced guidance (10)
b) the locking sleeve (4) is transferable in relation to the coupling body (3) into a second relative position (R2) in which the fixation between the one or more latching elements (6) and the plug nipple (2) is undone; wherein
the coupling system (1) comprises at least one spring (9) that is associated with the coupling body (3) and the locking sleeve (4) and that impinges the locking sleeve (4) in relation to the coupling body (3) with axial positioning force and with a torque for an independent change from the second relative position (R2) into the first relative position (R1), **characterised in that**
- the forced guidance (10) is formed by an s-shaped groove (13) in the locking sleeve (4), with a pin (11) that is in a fixed connection to the coupling body (3) engaging through said s-shaped groove (13), wherein
- the s-shaped groove (13) has at least two legs (30, 32), with the guiding directions for the pin (11) of each of the two legs running parallel to the longitudinal axis of the locking sleeve (4).

2. The coupling system as recited in claim 1, in which the at least two legs (30, 32) are connected to each other by a section (35) of the s-shaped groove (13), with the section (35) running orthogonal to the two legs (30, 32).

3. The coupling system as recited in claim 2, in which the section (35) of the s-shaped groove (13) connecting the legs (30, 32) to each other is oriented along the longitudinal axis of the locking sleeve (4).

4. The coupling system as recited in one of the claims 1 to 3, in which the first relative position (R1) and the second relative position (R2) are formed when the pin (11) is positioned in an end region of the at least two legs (30, 32), respectively.

5. The coupling system as recited in one or more of the claims 1 to 4, in which the at least one spring (9) is fastened with its two end regions to the locking sleeve (4) and to the coupling body (3) in each case by a holding nose (19).

6. The coupling system as recited in claim 5, in which the holding noses (19) each run parallel or at least approximately parallel to the longitudinal axis of the coupling body (3) and are form-lockingly accommodated in corresponding recesses of the locking sleeve (4) and of the coupling body (3).

7. The coupling system as recited in one or more of the claims 1 to 6, in which the at least one spring (9) is accommodated in a hollow space formed between the coupling body (3) and the locking sleeve (4).

8. The coupling system as recited in one or more of the claims 1 to 7, in which the at least one spring (9) has a number of coils that is greater than or equal to 3.

9. The coupling system as recited in one or more of the claims 1 to 8, in which the at least one spring (9) is associated with the coupling body (3) and the locking sleeve (4) such that its axial positioning force and its torque impingement of the locking sleeve (4) in relation to the coupling body (3) are completely or at least approximately completely cancelled in the first relative position (R1).

10. The coupling system as recited in one or more of the claims 1 to 9, comprising exactly one spring (9), with said exactly one spring (9) impinging the locking sleeve (4) in relation to the coupling body (3) with axial positioning force and with a torque for an independent change from the second relative position (R2) into the first relative position (R1).

11. A method for assembling a coupling system (1), in which a plug nipple (2) is inserted on the front side into a coupling body (3), as a result whereof
a) one or more latching elements (6) of the coupling body (3) fasten the plug nipple (2) to the coupling body (3); and
b) a locking sleeve (4) that is being held at the coupling body (3) changes independently from a second relative position (R2) into a first relative position (R1) in relation to the coupling body (3), in which first relative position (R1) the one or more latching elements (6) of the coupling body (3) fasten the plug nipple (2) and in which second relative position (R2) the fastening is cancelled by the locking sleeve (4); wherein
the independent transfer from the second relative position (R2) into the first relative position (R1) is carried out by means of at least one spring (9), which in this context twists and axially moves the locking sleeve (4) in relation to the coupling body (3), **characterised in that**
- the locking sleeve (4), when changing from the second relative position (R2) into the first relative position (R1), is first axially offset in relation to the coupling body (3) and temporally subsequently twisted without axial offset by means of the at least one spring (9) in order to change from the second relative position (R2) into the first relative position (R1); and wherein
- the locking sleeve (4), temporally after being twisted, is again axially offset in relation to the coupling body (3) without being twisted and in the process reaches the first relative position (R1).

12. The method as recited in claim 11, in which the at least one spring acts upon the locking sleeve (4) with axial positioning force and with a torque during the change from the second relative position (R2) into the first relative position (R1), with said axial positioning force and said torque being at least approximately completely cancelled in the first relative position (R1).

## Revendications

1. Système d'accouplement (1) pour tuyaux souples et rigides, comprenant
- un raccord enfichable (2),
- un corps d'accouplement (3) doté d'un ou de plusieurs éléments d'encliquetage (6), au moyen desquels le raccord enfichable (2) peut être fixé au corps d'accouplement (3), ainsi qu'
- une douille de verrouillage (4) qui est maintenue au corps d'accouplement (3) de manière mobile par le biais d'un guidage forcé (10),
ledit guidage forcé (10)
a) permettant de transférer la douille de verrouillage (4) dans une première position relative (R1) par rapport au corps d'accouplement (3), dans laquelle le raccord enfichable (2) est fixé au corps d'accouplement (3) par le biais de l'élément ou des plusieurs éléments d'encliquetage (6) et ledit guidage forcé (10)
b) permettant de transférer la douille de verrouillage (4) dans une deuxième position relative (R2) par rapport au corps d'accouplement (3), dans laquelle la fixation entre le ou les plusieurs éléments d'encliquetage (6) et le raccord enfichable (2) est annulée,
le système d'accouplement (1) comprenant au moins un ressort (9) qui est en liaison avec le corps d'accouplement (3) et la douille de verrouillage (4), et qui applique à la douille de verrouillage (4), par rapport au corps d'accouplement (3), une force de serrage axiale et un couple de rotation pour passer de manière autonome de la deuxième position relative (R2) à la première position relative (R1), **caractérisé en ce que**
- le guidage forcé (10) est formé par une rainure en forme de S (13) dans la douille de verrouillage (4), par laquelle un tenon (11) en liaison fixe avec le corps d'accouplement (3) entre en action,
- la rainure en forme de S (13) possédant au moins deux ailes (30, 32) dont les sens de guidage du tenon (11) sont chacun parallèles à l'axe longitudinal de la douille de verrouillage (4).

2. Système d'accouplement selon la revendication 1, dans lequel les au moins deux ailes (30, 32) sont reliées l'une à l'autre par au moins une partie (35) de la rainure en forme de S (13), laquelle partie (35) est à l'orthogonale des deux ailes (30, 32).

3. Système d'accouplement selon la revendication 2, dans lequel la partie (35) de la rainure en forme de S (13), qui relie les ailes (30, 32) l'une à l'autre, est orientée le long de l'axe longitudinal de la douille de verrouillage (4).

4. Système d'accouplement selon l'une des revendications 1 à 3, dans lequel la première position relative (R1) et la deuxième position relative (R2) sont formées, en fonction de la position du tenon (11), chacune dans une zone d'extrémité des au moins deux ailes (30, 32).

5. Système d'accouplement selon une ou plusieurs des revendications 1 à 4, dans lequel le(s) ressort(s) (9) est/sont fixé(s) à ses/leur deux zones d'extrémité par deux taquets de maintien (19) agencés respectivement sur la douille de verrouillage (4) et sur le corps d'accouplement (3).

6. Système d'accouplement selon la revendication 5, dans lequel les taquets de maintien (19) sont chacun parallèles ou au moins approximativement parallèles à l'axe longitudinal du corps d'accouplement (3) et sont logés mécaniquement solidaires dans des cavités correspondantes de la douille de verrouillage (4) et du corps d'accouplement (3).

7. Système d'accouplement selon une ou plusieurs des revendications 1 à 6, dans lequel le(s) ressort(s) (9) est/sont logé(s) dans un espace vide formé entre le corps d'accouplement (3) et la douille de verrouillage (4).

8. Système d'accouplement selon une ou plusieurs des revendications 1 à 7, dans lequel le/les ressort(s) possède(nt) un nombre d'enroulements égal ou supérieur à 3.

9. Système d'accouplement selon une ou plusieurs des revendications 1 à 8, dans lequel le(s) ressort(s) (9) est/sont en liaison avec le corps d'accouplement (3) et la douille de verrouillage (4) de telle sorte que sa/leur force de serrage axiale ainsi que son/leur application de couple de rotation à la douille de verrouillage (4) par rapport au corps d'accouplement (3) sont intégralement ou du moins approximativement intégralement annulées dans la première position relative (R1).

10. Système d'accouplement selon une ou plusieurs des revendications 1 à 9, comprenant exactement un ressort (9), lequel exactement un ressort (9) applique à la douille de verrouillage (4), par rapport au corps d'accouplement (3), une force de serrage axiale et un couple de rotation pour le passage autonome de la deuxième position relative (R2) à la première position relative (R1).

11. Procédé de composition d'un système d'accouplement (1), dans lequel un raccord enfichable (2) est enfiché à l'avant d'un corps d'accouplement (3), dont il résulte que
a) un ou plusieurs éléments d'encliquetage (6) du corps d'accouplement (3) fixent le raccord enfichable (2) au corps d'accouplement (3) et
b) qu'une douille de verrouillage (4), qui est maintenue au corps d'accouplement (3), passe de manière autonome d'une deuxième position relative (R2) à une première position relative (R1) par rapport au corps d'accouplement (3), le ou les plusieurs éléments d'encliquetage (6) du corps d'accouplement (3) fixant, dans ladite première position relative (R1), le raccord enfichable (2), et, dans ladite deuxième position relative (R2), la fixation étant annulée par le biais de la douille de verrouillage (4),
le transfert autonome de la deuxième position relative (R2) dans la première position relative (R1) s'effectuant au moyen d'au moins un ressort (9), lequel tourne à cet égard la douille de verrouillage (4) par rapport au corps d'accouplement (3) et la déplace axialement, **caractérisé en ce que**
- la douille de verrouillage (4) est, lors du passage de la deuxième position relative (R2) à la première position relative (R1), tout d'abord déplacée axialement au moyen du/des ressort(s) (9) par rapport au corps d'accouplement (3) puis à la suite de quoi, tournée sans déplacement axial pour passer de la deuxième position relative (R2) à la première position relative (R1), et
- la douille de verrouillage (4) étant, après avoir été tournée par rapport au corps d'accouplement (3), à nouveau déplacée axialement sans tourner et arrivant à cet égard dans la première position relative (R1).

12. Procédé selon la revendication 11, dans lequel le(s) ressort(s), lors du passage de la deuxième position relative (R2) à la première position relative (R1), agit/agissent avec une force de serrage axiale et un couple de rotation sur la douille de verrouillage (4), ladite force de serrage axiale et ledit couple de rotation étant au moins approximativement intégralement annulés dans la première position relative (R1).
